# EUROPEAN PATENT APPLICATION

(11) **EP 4 851 120 A1**
(43) Date of publication of application: **09.12.2026**
(21) Application number: 25748455.0
(22) Date of filing: 14.01.2025
(51) Int. Cl.: C04B 7/36, B01D 53/62

(54) **CEMENT FIRING FACILITY AND METHOD FOR PRODUCING CEMENT CLINKER**

(30) Priority: 31.01.2024 JP 2024012767
(71) Applicant: Sumitomo Osaka Cement Co., Ltd., Tokyo, 105-8641 (JP)
(72) Inventor: OKADA, Yutaka, Tokyo 105-8641 (JP); NAKAYAMA, Shin, Tokyo 105-8641 (JP)
(74) Representative: Müller-Boré & Partner Patentanwälte PartG mbB
(86) International application number: PCT/JP2025/000776
(87) International publication number: WO 2025/164274

(57) **Abstract**

The present invention provides a cement firing facility including a drying and pulverizing apparatus for a cement raw material, a suspension preheater, a rotary kiln, a clinker cooler, a carbon dioxide recovery apparatus, and a carbonation apparatus, which can suppress the amount of carbon dioxide released into the atmosphere and can efficiently dry the cement raw material, and a method for producing cement clinker using the same.

## Description

### TECHNICAL FIELD

The present disclosure relates to a cement firing facility and a method for producing cement clinker.

### BACKGROUND

Recently, as concerns over global warming have increased, there has been a growing demand for reduction of the amount of carbon dioxide released into the atmosphere. In various facilities such as a power plant, an incinerator, a cement plant, an iron mill, or a plant facility, a method for separating and recovering carbon dioxide in exhaust gas containing carbon dioxide that is produced by an operation to reduce the amount of the exhaust gas released into the atmosphere is considered. In particular, reducing the amount of released carbon dioxide in the cement plant is regarded as a critical issue.

Examples of a general configuration of the cement plant include a configuration disclosed in Patent Literature 1, that is, a cement production facility including a preheater that preheats a cement raw material through heat exchange with high-temperature gas, a cement firing furnace that fires the cement raw material to produce cement clinker, a cooling device that introduces a portion of air heated to a high temperature through heat exchange with the cement clinker as burner combustion air of the cement firing furnace, an absorption tower that stores an absorbent for absorbing carbon dioxide, a regeneration tower that volatilizes the carbon dioxide by heating the absorbent, and an exhaust gas introduction pipe that introduces exhaust gas from the preheater to the absorption tower after using the exhaust gas as a heating source via the regeneration tower.

As the suspension preheater, for example, a heating device is known, for example, as shown in Patent Literature 2, which has a structure in which a plurality of independent hot gases are caused to flow through each of a plurality of gas ducts formed of a plurality of dust collectors, while powdery substances are introduced from the gas duct leading to an uppermost dust collector of the plurality of dust collectors, passed sequentially through the dust collectors, and discharged from a lower part of a lowermost dust collector.

In addition, Patent Literature 3 discloses a cement clinker production system including a cyclone-type preheating device for preheating a cement clinker raw material, a rotary kiln that fires the preheated cement clinker raw material to produce cement clinker, a calciner that is disposed upstream of the rotary kiln and that accelerates decarbonation of the cement clinker raw material, a preheated raw material supply path for supplying the cement clinker raw material from the preheating device to the calciner, a clinker cooler that cools the cement clinker, a kiln exhaust gas discharge path for discharging exhaust gas produced in the rotary kiln after the exhaust gas has passed through the preheating device, a calciner exhaust gas discharge path for discharging carbon dioxide-containing exhaust gas produced in the calciner, a device for supplying combustion-supporting gas having an increased oxygen concentration, first recovery means for recovering a quicklime-containing raw material from the carbon dioxide-containing exhaust gas, a combustion-supporting gas supply path for heat exchange between the carbon dioxide-containing exhaust gas and the combustion-supporting gas at a location upstream of the first recovery means, and a calciner exhaust gas supply path for combining a portion of the carbon dioxide-containing exhaust gas with the combustion-supporting gas at a location downstream of the first recovery means of a calciner exhaust gas supply path.

### Citation List

### Patent Literature

Patent Literature No. 1: Japanese Laid-open Patent Publication No. H9-110485
Patent Literature No. 2: Japanese Laid-open Patent Publication No. S55-22322
Patent Literature No. 3: Japanese Laid-open Patent Publication No. 2022-148255

### SUMMARY OF INVENTION

### Technical Problem

An object of the present invention is to provide a cement firing facility and a method for producing cement clinker that can suppress the amount of carbon dioxide released into the atmosphere and can efficiently dry a cement raw material.

### Solution to Problem

In order to address the above issue, the present invention provides the following cement firing facility.
1. A cement firing facility including:
   a drying and pulverizing apparatus that dries and pulverizes a cement raw material into a powdered raw material;
   a suspension preheater that preheats and calcines the powdered raw material;
   a rotary kiln that fires the preheated and calcined powdered raw material to produce cement clinker;
   a cement clinker cooler that cools the cement clinker;
   a carbon dioxide recovery apparatus that recovers carbon dioxide contained in combustion exhaust gas discharged from the suspension preheater; and
   a carbonation apparatus that produces a powdered material containing calcium carbonate by reaction of the combustion exhaust gas discharged from the suspension preheater and a powdered material containing calcium oxide,
   in which the suspension preheater includes
   a calciner that calcines the powdered raw material,
   two different gas ducts, the two gas ducts including a calciner-system gas duct through which calciner combustion exhaust gas discharged from the calciner passes and a kiln-system gas duct through which kiln combustion exhaust gas discharged from the rotary kiln passes,
   a calciner combustion exhaust gas outlet for discharging, from the suspension preheater, the calciner combustion exhaust gas having preheated and calcined the powdered raw material by passing through the calciner-system gas duct, and
   a kiln combustion exhaust gas outlet for discharging, from the suspension preheater, the kiln combustion exhaust gas having preheated and calcined the powdered raw material by passing through the kiln-system gas duct, and
   the cement firing facility includes
   exhaust gas ducts including
      a calciner combustion exhaust gas discharge duct for supplying the calciner combustion exhaust gas discharged from the calciner combustion exhaust gas outlet to the carbon dioxide recovery apparatus,
      a kiln combustion exhaust gas discharge duct for supplying the kiln combustion exhaust gas discharged from the kiln combustion exhaust gas outlet to a drying device included in the drying and pulverizing apparatus,
      a carbonation apparatus air supply duct for supplying the kiln combustion exhaust gas passing through the kiln combustion exhaust gas discharge duct to the carbonation apparatus, and
      a carbonation apparatus exhaust duct for supplying the kiln combustion exhaust gas discharged from the carbonation apparatus to the kiln combustion exhaust gas discharge duct,
   a fractionation apparatus that fractionates the preheated and calcined powdered raw material from the suspension preheater, and a powdered material supply apparatus 1 for supplying the powdered raw material fractionated by the fractionation apparatus to the carbonation apparatus as the powdered material containing calcium oxide, and
   a bleed apparatus that bleeds off the kiln combustion exhaust gas before being supplied to a cyclone dust collector at a lowermost stage of the kiln-system gas duct of the suspension preheater, a powdered raw material separation apparatus that separates the powdered raw material contained in the kiln combustion exhaust gas bled off by the bleed apparatus, and a powdered material supply apparatus 2 for supplying the powdered raw material separated by the powdered raw material separation apparatus to the carbonation apparatus as the powdered material containing calcium oxide.
   The present invention provides the following cement firing facility as a preferred embodiment.
2. The method for producing cement clinker according to 1 above,
   in which the fractionation apparatus is provided in a powdered raw material conduit that supplies the powdered raw material preheated and calcined in the suspension preheater to the rotary kiln.
3. The cement firing facility according to 1 or 2 above, further including:
   a powdered raw material supply apparatus that supplies the powdered raw material discharged from the drying and pulverizing apparatus to the suspension preheater, and a carbonation apparatus product transport apparatus that combines the powdered material containing calcium carbonate produced in the carbonation apparatus with the powdered raw material discharged from the drying and pulverizing apparatus.
4. The cement firing facility according to 3 above, further including:
   a powdered raw material mixture sampling apparatus that samples a powdered raw material mixture of the powdered material containing calcium carbonate transported by the carbonation apparatus product transport apparatus and the powdered raw material discharged from the drying and pulverizing apparatus, a chemical component measuring apparatus that measures a chemical component of the powdered raw material mixture sampled by the powdered raw material mixture sampling apparatus, and a cement raw material blending apparatus that adjusts blend of the cement raw material based on a measurement result of the chemical component measuring apparatus.
5. The cement firing facility according to any one of 1 to 4 above,
   in which the carbonation apparatus is a fluidized bed reactor.
   In addition, the present invention provides the following method for producing cement clinker.
6. A method for producing cement clinker using the cement firing facility according to any one of 1 to 5 above, the method including:
   performing adjustment by any one of the following conditions (i) to (iii),
   (i) adjusting a supply amount of the powdered raw material to the suspension preheater,
   (ii) adjusting a supply amount of a fuel to the rotary kiln, and
   (iii) adjusting an amount of water sprayed into the kiln combustion exhaust gas discharge duct.
7. The method for producing cement clinker according to 6 above,
   in which a temperature of the kiln combustion exhaust gas discharged from the kiln combustion exhaust gas outlet is adjusted to 250°C or higher and 600°C or lower by the conditions.

### Advantageous Effects of Invention

According to the present invention, it is possible to provide a cement firing facility and a method for producing cement clinker that can suppress the amount of carbon dioxide released into the atmosphere and can efficiently dry a cement raw material.

### BRIEF DESCRIPTION OF DRAWINGS

[FIG. 1] A schematic diagram showing one preferred aspect of a cement firing facility of the present embodiment.
[FIG. 2] A schematic diagram showing one preferred aspect of a suspension preheater adopted in the cement firing facility of the present embodiment.
[FIG. 3] A schematic diagram showing one preferred aspect of a carbonation apparatus adopted in the cement firing facility of the present embodiment.
[FIG. 4] A schematic diagram for describing results of Examples.
[FIG. 5] A schematic diagram for describing results of Comparative Examples.

### DESCRIPTION OF EMBODIMENTS

Hereinafter, an embodiment of the present invention (hereinafter, also referred to as "present embodiment") will be described. The present invention is not limited to the following embodiment and can be modified and implemented as such without hindering the effects of the invention. The notation of a numerical range of "AA to BB" in the present specification means "AA or more and BB or less". In addition, in the present specification, numerical values associated with "or more", "or less", and "to" in the description of a numerical range are values that can be arbitrarily combined. For example, when "CC to DD" and "EE to FF" in a certain numerical range are described, numerical ranges such as "CC to FF" and "EE to DD" are also included.

### [Cement Firing Facility]

A cement firing facility of the present embodiment includes:
a drying and pulverizing apparatus that dries and pulverizes a cement raw material into a powdered raw material;
a suspension preheater that preheats and calcines the powdered raw material;
a rotary kiln that fires the preheated and calcined powdered raw material to produce cement clinker;
a cement clinker cooler that cools the cement clinker;
a carbon dioxide recovery apparatus that recovers carbon dioxide contained in combustion exhaust gas discharged from the suspension preheater; and
a carbonation apparatus that produces a powdered material containing calcium carbonate by reaction of the combustion exhaust gas discharged from the suspension preheater and a powdered material containing calcium oxide,
in which the suspension preheater includes
a calciner that calcines the powdered raw material,
two different gas ducts, the two gas ducts including a calciner-system gas duct through which calciner combustion exhaust gas discharged from the calciner passes and a kiln-system gas duct through which kiln combustion exhaust gas discharged from the rotary kiln passes,
a calciner combustion exhaust gas outlet for discharging, from the suspension preheater, the calciner combustion exhaust gas having preheated and calcined the powdered raw material by passing through the calciner-system gas duct, and
a kiln combustion exhaust gas outlet for discharging, from the suspension preheater, the kiln combustion exhaust gas having preheated and calcined the powdered raw material by passing through the kiln-system gas duct, and
the cement firing facility includes
exhaust gas ducts including
   a calciner combustion exhaust gas discharge duct for supplying the calciner combustion exhaust gas discharged from the calciner combustion exhaust gas outlet to the carbon dioxide recovery apparatus,
   a kiln combustion exhaust gas discharge duct for supplying the kiln combustion exhaust gas discharged from the kiln combustion exhaust gas outlet to a drying device included in the drying and pulverizing apparatus,
   a carbonation apparatus air supply duct for supplying the kiln combustion exhaust gas passing through the kiln combustion exhaust gas discharge duct to the carbonation apparatus, and
   a carbonation apparatus exhaust duct for supplying the kiln combustion exhaust gas discharged from the carbonation apparatus to the kiln combustion exhaust gas discharge duct,
a fractionation apparatus that fractionates the preheated and calcined powdered raw material from the suspension preheater, and a powdered material supply apparatus 1 for supplying the powdered raw material fractionated by the fractionation apparatus to the carbonation apparatus as the powdered material containing calcium oxide, and
a bleed apparatus that bleeds off the kiln combustion exhaust gas before being supplied to a cyclone dust collector at a lowermost stage of the kiln-system gas duct of the suspension preheater, a powdered raw material separation apparatus that separates the powdered raw material contained in the kiln combustion exhaust gas bled off by the bleed apparatus, and a powdered material supply apparatus 2 for supplying the powdered raw material separated by the powdered raw material separation apparatus to the carbonation apparatus as the powdered material containing calcium oxide.

The cement firing facility disclosed in Patent Literature 1 is designed to remove carbon dioxide from exhaust gas at a low cost by using the thermal energy of the exhaust gas produced in a cement production facility by introducing the exhaust gas discharged from the preheater that preheats the cement raw material through heat exchange with a high-temperature gas to the absorption tower after using the exhaust gas as a heating source via the regeneration tower. However, since carbon dioxide is attempted to be recovered using the absorption tower targeting the total amount of the exhaust gas discharged from the preheater, the concentration of carbon dioxide contained in the exhaust gas that is the target of carbon dioxide recovery becomes low. Therefore, the recovery efficiency of the carbon dioxide recovery facility cannot be considered high, and there is room for improvement in this respect. In addition, there is a lack of consideration for the perspective of efficiently drying the cement raw material.

The suspension preheater disclosed in Patent Literature 2 aims to improve the thermal efficiency of the suspension preheater itself, thereby enabling a miniaturization of an exhaust fan and significantly reducing the thermal energy and electric power energy required for heating. Although the improvement of the thermal efficiency is indeed achieved and the suspension preheater has excellent thermal efficiency, it is assumed that the hot gas used for heating the powdered substance (powdered cement raw material) in the suspension preheater is discharged from the exhaust fan, and there is room for further improvement in terms of reducing the amount of released carbon dioxide.

The cement clinker production system disclosed in Patent Literature 3 does not consider the heat utilization of kiln exhaust gas released into the atmosphere. In addition, there is room for further improvement in reducing the amount of carbon dioxide contained in the kiln exhaust gas, that is, the amount of carbon dioxide released into the atmosphere.

In general, not only energy-derived carbon dioxide generated from the fuel used in the suspension preheater and the rotary kiln, but also non-energy-derived carbon dioxide generated from the powdered raw material are discharged from the cement firing facility. The generation ratio of the energy-derived carbon dioxide and the non-energy-derived carbon dioxide is said to be 40:60. Therefore, in order to reduce the amount of carbon dioxide released into the atmosphere from the cement firing facility, it is necessary to consider both the energy-derived carbon dioxide and the non-energy-derived carbon dioxide, and the present inventors decided to particularly proceed with the study on reducing the non-energy-derived carbon dioxide.

First, the present inventors focused on the characteristic that the calciner combustion exhaust gas from the calciner of the suspension preheater has a higher content of carbon dioxide than the kiln combustion exhaust gas from the rotary kiln, as a medium used as a heat source for the suspension preheater. Since the calciner combustion exhaust gas has a higher content of carbon dioxide than the kiln combustion exhaust gas, it was considered that recovering carbon dioxide from the calciner combustion exhaust gas would lead to an improvement in the recovery efficiency of carbon dioxide. In addition, in the suspension preheater, the calcium contained in the powdered raw material is converted into calcium oxide through decarbonation. Therefore, it was considered that the amount of carbon dioxide released into the atmosphere could be reduced by using carbon dioxide contained in the kiln combustion exhaust gas for the carbonation of calcium oxide contained in the powdered raw material, thereby recovering the carbon dioxide from the kiln combustion exhaust gas.

Based on the above studies, it was found that the amount of carbon dioxide released into the atmosphere could be suppressed by providing the carbon dioxide recovery apparatus and the carbonation apparatus in the cement firing facility, supplying the calciner combustion exhaust gas to the carbon dioxide recovery apparatus, and supplying the kiln combustion exhaust gas to the carbonation apparatus. The kiln combustion exhaust gas supplied to the carbonating apparatus was effectively utilized for drying the powdered raw material, since the carbonation reaction is an exothermic reaction and the temperature of the kiln combustion exhaust gas is thereby maintained. As a result, the present inventors have completed a cement firing facility and a method for producing cement clinker that can suppress the amount of carbon dioxide released into the atmosphere and can efficiently dry a cement raw material.

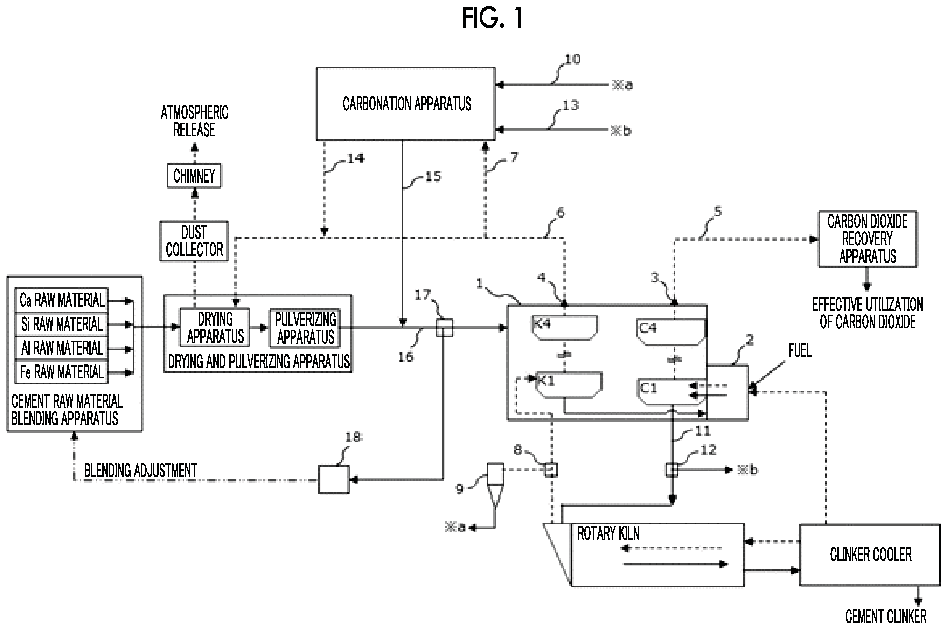

Hereinafter, the cement firing facility and the method for producing cement clinker of the present embodiment will be described with reference to FIG. 1. FIG. 1 is a schematic diagram showing one preferred aspect of the cement firing facility of the present embodiment.

FIG. 1 shows that the cement firing facility includes: a suspension preheater (1) that preheats and calcines a powdered raw material produced by drying and pulverizing a cement raw material in a drying and pulverizing apparatus; a rotary kiln that fires the powdered raw material to produce cement clinker; and a cement clinker cooler that cools the cement clinker.

Regarding the carbonation apparatus, it is shown that the powdered raw material preheated and calcined in the suspension preheater (1) is supplied to the carbonation apparatus as a powdered material containing calcium oxide via a fractionation apparatus (12) and a powdered material supply apparatus 1 (13), the kiln combustion exhaust gas is bled off by a bleed apparatus (8) before being supplied to a cyclone dust collector K1 at the lowermost stage of the kiln-system gas duct of the suspension preheater (1), and the powdered raw material separated by a powdered raw material separation apparatus (9) is supplied to the carbonation apparatus as a powdered material containing calcium oxide via a powdered material supply apparatus 2 (10), and the kiln combustion exhaust gas passing through the kiln combustion exhaust gas discharge duct of the suspension preheater (1) as the combustion exhaust gas is supplied to the carbonation apparatus via a kiln combustion exhaust gas outlet (4), a kiln combustion exhaust gas discharge duct (6), and a carbonation apparatus air supply duct (7).

FIG. 1 shows that the kiln combustion exhaust gas used in the carbonation apparatus is supplied to the kiln combustion exhaust gas discharge duct (6) via a carbonation apparatus exhaust duct (14), the kiln combustion exhaust gas is used as a heat source in the drying apparatus of the drying and pulverizing apparatus, and finally, the kiln combustion exhaust gas is released into the atmosphere via a dust collector and a chimney.

In addition, the powdered material containing calcium carbonate produced in the carbonation apparatus is supplied to the suspension preheater (1) by a powdered raw material supply apparatus (16) as a powdered raw material mixture, together with the powdered raw material discharged from the drying and pulverizing apparatus, via a carbonation apparatus product transport apparatus (15), and is preheated and calcined. It is also shown that the cement firing facility includes: a powdered raw material mixture sampling apparatus (17) that partially samples the powdered raw material mixture of the powdered raw material discharged from the drying and pulverizing apparatus and the powdered material containing calcium carbonate produced in the carbonation apparatus; a chemical component measuring apparatus (18) that analyzes the sampled powdered raw material mixture; and a cement raw material blending apparatus that adjusts blend of the cement raw material (Ca raw material, Si raw material, Al raw material, and Fe raw material) based on the measurement result.

### [Suspension Preheater]

The suspension preheater included in the cement firing facility of the present embodiment includes: a calciner that calcines the powdered raw material; two different gas ducts, the two gas ducts including a calciner-system gas duct through which calciner combustion exhaust gas discharged from the calciner passes and a kiln-system gas duct through which kiln combustion exhaust gas discharged from the rotary kiln passes; a calciner combustion exhaust gas outlet for discharging, from the suspension preheater, the calciner combustion exhaust gas having preheated and calcined the powdered raw material by passing through the calciner-system gas duct; and a kiln combustion exhaust gas outlet for discharging, from the suspension preheater, the kiln combustion exhaust gas having preheated and calcined the powdered raw material by passing through the kiln-system gas duct.

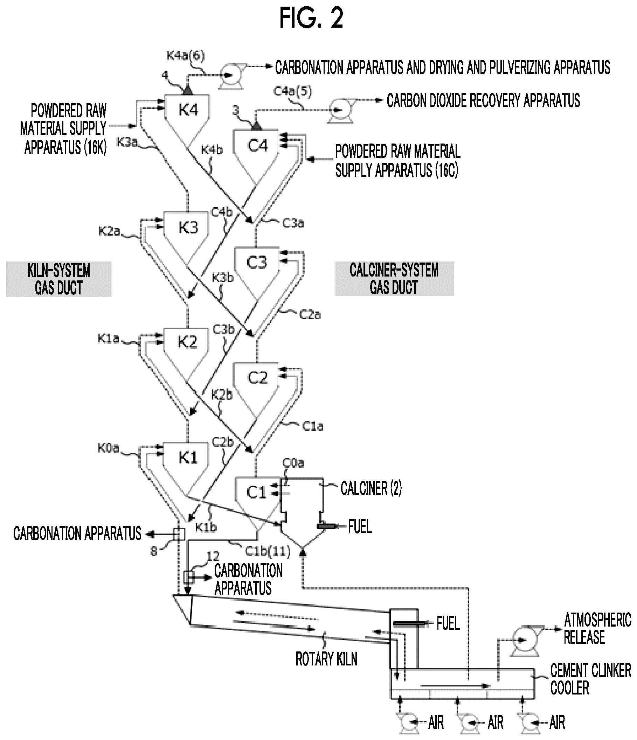

There are no particular restrictions on other configurations as long as the suspension preheater includes the calciner, the two different gas ducts of the calciner-system gas duct and the kiln-system gas duct, the calciner combustion exhaust gas outlet, and the kiln combustion exhaust gas outlet. One preferred aspect of the suspension preheater will be described with reference to FIG. 2.

FIG. 2 shows that the suspension preheater includes four-stage cyclone dust collectors (four-stage cyclone dust collectors of C1 to C4 and K1 to K4) collecting the powdered raw material, and gas flow paths (gas flow paths of C0a to C4a and K0a to K4a) sequentially connecting the four-stage cyclone dust collectors, and includes two gas ducts (calciner-system flow path and kiln-system flow path) through which different exhaust gases independently pass. The calciner combustion exhaust gas and the kiln combustion exhaust gas, which are different from each other, independently pass through the calciner-system gas duct and the kiln-system gas duct, the calciner combustion exhaust gas sequentially passes from the cyclone dust collector C1 at the lowermost stage to the cyclone dust collector C4 at the uppermost stage via the gas flow paths (C0a to C4a), and the kiln combustion exhaust gas sequentially passes from the cyclone dust collector K1 at the lowermost stage to the cyclone dust collector K4 at the uppermost stage via the gas flow paths (K1a to K4a).

FIG. 2 shows that the calciner combustion exhaust gas passes through the calciner-system gas duct of the suspension preheater (1) and is discharged from a calciner combustion exhaust gas outlet (3), and the kiln combustion exhaust gas passes through the kiln-system gas duct and is discharged from a kiln combustion exhaust gas outlet (4). In addition, as shown in FIG. 2, the calciner combustion exhaust gas and the kiln combustion exhaust gas are supplied to their respective applications via a calciner combustion exhaust gas discharge duct (5) and the kiln combustion exhaust gas discharge duct (6), respectively.

As described above, since the two gas ducts through which different exhaust gases independently pass are provided, the calciner combustion exhaust gas and the kiln combustion exhaust gas can be handled separately. As a result, the calciner combustion exhaust gas having a high content of carbon dioxide can be more efficiently recovered by the carbon dioxide recovery apparatus. In addition, by supplying the kiln combustion exhaust gas to the carbonation apparatus, the kiln combustion exhaust gas can be used for the carbonation of the calcium oxide contained in the powdered raw material to recover carbon dioxide, and the amount of carbon dioxide released into the atmosphere can be reduced.

In addition, as shown in FIG. 2, it is preferable that the two gas ducts through which different exhaust gases independently pass be provided with induced draft fans (calciner combustion exhaust gas induced draft fan and kiln combustion exhaust gas induced draft fan). In addition, it is also preferable that an airflow control damper (not shown) or the like be provided. By providing the induced draft fan and the airflow control damper, it is possible to easily adjust the flow rate and pressure of the combustion exhaust gas. In particular, for the duct of the kiln combustion exhaust gas, it is preferable to provide the induced draft fan and the airflow control damper in order to adjust the flow rate to the downstream carbonation apparatus and drying and pulverizing apparatus.

Regarding the powdered raw material, FIG. 2 shows that the cement firing facility includes, as raw material conduits: kiln-system raw material conduits of the kiln-system gas duct including raw material conduits (K2b to K4b) connecting the cyclone dust collector of the kiln-system gas duct and the gas flow path that supplies the calciner combustion exhaust gas to the cyclone dust collector of the calciner-system gas duct at the same stage as the cyclone dust collector of the kiln-system gas duct, and a raw material conduit (K1b) connecting the cyclone dust collector at the lowermost stage of the kiln-system gas duct and the calciner; and calciner-system raw material conduits of the calciner-system gas duct including raw material conduits (C2b to C4b) connecting the cyclone dust collector of the calciner-system gas duct and the gas flow path that supplies the kiln combustion exhaust gas to the cyclone dust collector of the kiln-system gas duct located one stage below the cyclone dust collector of the calciner-system gas duct, and a raw material conduit (C1b) connecting the cyclone dust collector at the lowermost stage of the calciner-system gas duct and the rotary kiln.

The powdered raw material mixture of the powdered raw material discharged from the drying and pulverizing apparatus and the powdered material containing calcium carbonate produced in the carbonation apparatus is supplied to the suspension preheater (1) by the powdered raw material supply apparatus (16), more specifically, from the powdered raw material supply apparatus (16) to the cyclone dust collector at the uppermost stage of the suspension preheater 1. FIG. 2 shows that the powdered raw material mixture serving as the powdered raw material is supplied from a powdered raw material supply apparatus (16K) of the kiln system to the cyclone dust collector K4 at the uppermost stage of the kiln-system gas duct, and from a powdered raw material supply apparatus (16C) of the calciner system to the cyclone dust collector C4 at the uppermost stage of the calciner-system gas duct.

Then, the powdered raw material mixture supplied from the powdered raw material supply apparatus (16K) of the kiln system is preheated and calcined while passing through the cyclone dust collector K4, the raw material conduit K4b, the gas flow path C3a, the cyclone dust collector C4, the raw material conduit C4b, the gas flow path K2a, the cyclone dust collector K3, the raw material conduit K3b, the gas flow path C2a, the cyclone dust collector C3, the raw material conduit C3b, the gas flow path K1a, the cyclone dust collector K2, the raw material conduit K2b, the gas flow path C1a, the cyclone dust collector C2, the raw material conduit C2b, the gas flow path K0a, the cyclone dust collector K1, the raw material conduit K1b, the calciner, the gas flow path C0a, the cyclone dust collector C1, and the raw material conduit C1b in this order, and is supplied to the rotary kiln.

In addition, the powdered raw material supplied from the powdered raw material supply apparatus (16C) of the calciner system is supplied to the cyclone dust collector C4, and is preheated and calcined while passing through the raw material conduit C4b from the raw material conduit C1b together with the powdered raw material supplied from the powdered raw material supply apparatus (16K) of the kiln system, and is supplied to the rotary kiln.

As described above, the powdered raw material supplied to the suspension preheater (1) moves alternately from the upper stage to the lower stage through the cyclone dust collectors included in the calciner-system gas duct and the kiln-system gas duct, which are different gas ducts, and after passing through all the cyclone dust collectors, the powdered raw material is supplied to the rotary kiln. In addition, the powdered raw material moving from the uppermost cyclone dust collector to the lowermost cyclone dust collector can be efficiently preheated and calcined by coming into contact with the combustion exhaust gases (the calciner combustion exhaust gas and the kiln combustion exhaust gas) moving in the gas ducts in the direction opposite to the above-described direction, that is, from the lowermost cyclone dust collector to the uppermost cyclone dust collector.

As the powdered raw material supply apparatus (16) included in the cement firing facility of the present embodiment, an apparatus having the same form as the powdered raw material supply apparatus included in the cement firing facility in the related field can be adopted. For example, it is preferable that the powdered raw material supply apparatus (16) include piping for supplying the powdered raw material discharged from the drying and pulverizing apparatus to the suspension preheater (1), and a mixing device that mixes the powdered raw material with the powdered material containing calcium carbonate transported from the carbonation apparatus by the carbonation apparatus product transport apparatus (15) to prepare a powdered raw material mixture.

In addition, the powdered raw material supply apparatus (16) and the carbonation apparatus product transport apparatus (15) may include, in addition to piping through which the object to be supplied or transported passes, a device such as a feeder for pressure feeding as necessary.

### [Carbonation Apparatus]

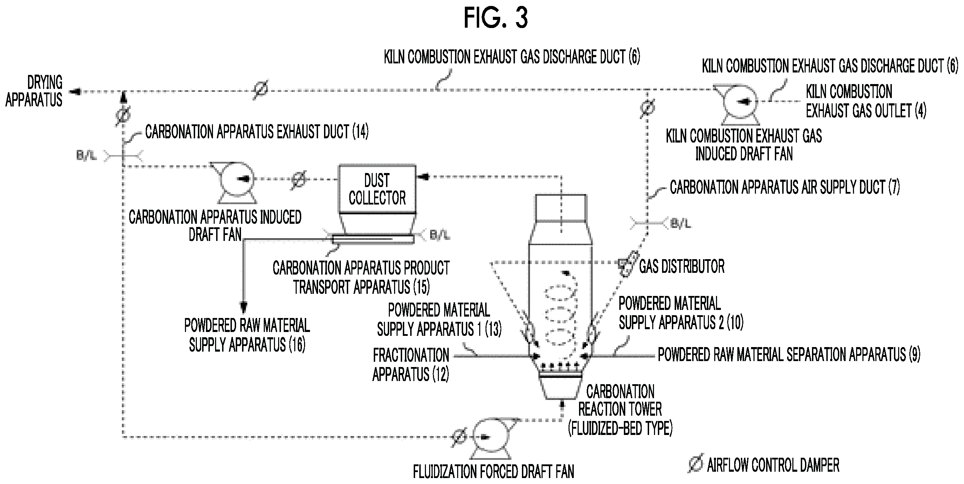

The cement firing facility of the present embodiment includes a carbonation apparatus that produces a powdered material containing calcium carbonate by reaction of the combustion exhaust gas discharged from the suspension preheater (1) and a powdered material containing calcium oxide. The carbonation apparatus will be described with reference to FIG. 3.

FIG. 3 is a schematic diagram showing one preferred aspect of the carbonation apparatus. FIG. 3 shows that the carbonation apparatus includes: a carbonation reaction tower in which the reaction between the kiln combustion exhaust gas and the powdered material containing calcium oxide is performed; a dust collector that separates the carbonation apparatus product contained in the kiln combustion exhaust gas discharged from the carbonation reaction tower from the kiln combustion exhaust gas; a carbonation apparatus induced draft fan that discharges the kiln combustion exhaust gas from the dust collector and supplies the kiln combustion exhaust gas to the drying apparatus; and a fluidization forced draft fan that recycles the kiln combustion exhaust gas discharged from the dust collector back to the carbonation reaction tower for the purpose of fluidization.

### (Combustion Exhaust Gas)

The combustion exhaust gas is supplied to the carbonation apparatus by passing through the kiln combustion exhaust gas discharge duct (6) for supplying the kiln combustion exhaust gas discharged from the kiln combustion exhaust gas outlet to the drying device included in the drying and pulverizing apparatus and the carbonation apparatus air supply duct (7) for supplying the kiln combustion exhaust gas passing through the kiln combustion exhaust gas discharge duct to the carbonation apparatus. That is, the combustion exhaust gas used in the carbonation apparatus is the kiln combustion exhaust gas.

The flow rate of the kiln combustion exhaust gas supplied to the carbonation apparatus (the flow rate of the kiln combustion exhaust gas to the carbonation apparatus air supply duct (7)) and the flow rate of the kiln combustion exhaust gas supplied directly to the drying apparatus without being supplied to the carbonation apparatus (the flow rate of the kiln combustion exhaust gas to the kiln combustion exhaust gas discharge duct (6)) can be arbitrarily distributed. As a result, the amount of carbon dioxide released into the atmosphere can be adjusted. In addition, the total amount of the kiln combustion exhaust gas may be supplied to the carbonation apparatus.

The distribution of the flow rate of the kiln combustion exhaust gas need only be adjusted, for example, in consideration of the amount of the kiln combustion exhaust gas discharged from the suspension preheater (1), the amount of the cement raw material to be dried in the drying apparatus of the drying and pulverizing apparatus, the amount of the powdered material containing calcium oxide, and the like, and can be performed by adjusting the airflow control damper, the carbonation apparatus induced draft fan, and the like. For example, in a case where the content of carbon dioxide contained in the kiln combustion exhaust gas is extremely low, the power consumption of the carbonation apparatus induced draft fan can be reduced by reducing the air supply amount to the carbonation apparatus.

The kiln combustion exhaust gas supplied to the carbonation apparatus is supplied from the suspension preheater (1) via the kiln combustion exhaust gas outlet (4) and the kiln combustion exhaust gas discharge duct (6). Therefore, the kiln combustion exhaust gas supplied to the carbonation apparatus has a temperature approximately equal to the discharge temperature from the suspension preheater (1). The temperature of the kiln combustion exhaust gas supplied to the carbonation apparatus is preferably 250°C or higher and 600°C or lower as an upper limit. When the temperature is 250°C or higher, the cement raw material can be satisfactorily dried, and, when the temperature is 600°C or lower, the reaction efficiency of the carbonation reaction of calcium oxide in the carbonation apparatus can be easily improved to 100%.

Examples of a method for adjusting the temperature of the kiln combustion exhaust gas supplied to the carbonation apparatus include the following methods (i) to (iii), and these methods can be performed alone or in combination.
(i) The amount of the powdered raw material supplied to the suspension preheater (1) is adjusted. By increasing the amount of the powdered raw material charged, the temperature of the kiln combustion exhaust gas can be decreased, thereby decreasing the temperature of the kiln combustion exhaust gas supplied to the carbonation apparatus.
(ii) The amount of the fuel supplied to the rotary kiln is adjusted. By increasing the amount of the fuel, the temperature of the kiln combustion exhaust gas supplied to the carbonation apparatus can be increased. In addition, as for the increase in the temperature of the kiln combustion exhaust gas, for example, by charging a waste material having a calorific value, such as waste bleaching clay or waste plastics such as waste tires, into a raw material conduit (upstream of the calciner) such as the raw material conduit K0a, the temperature of the kiln combustion exhaust gas supplied to the carbonation apparatus can also be increased.
(iii) The amount of water sprayed into the kiln combustion exhaust gas discharge duct (specifically, any point of the kiln combustion exhaust gas discharge duct (6) from the kiln combustion exhaust gas outlet (4)) is adjusted. By adjusting the amount of sprayed water, the increase or decrease in the temperature of the kiln combustion exhaust gas supplied to the carbonation apparatus can be adjusted. Here, industrial water or tap water may be used for the water spraying, and waste may also be charged, such as liquid waste including, for example, waste acid and waste alkali, or high-moisture-content waste such as sewage sludge.

The kiln combustion exhaust gas used in the carbonation apparatus becomes combustion exhaust gas having a reduced carbon dioxide content, because carbon dioxide is consumed by the carbonation reaction of calcium oxide. In addition, since the carbonation reaction is an exothermic reaction, the temperature of the kiln combustion exhaust gas discharged from the carbonation apparatus is increased, depending on the temperature at which the kiln combustion exhaust gas is supplied to the carbonation apparatus. Although the kiln combustion exhaust gas supplied to the carbonation apparatus undergoes a temperature decrease due to heat dissipation from the kiln combustion exhaust gas discharge duct or the like, the kiln combustion exhaust gas is heated by the above-described exothermic reaction, and thus can be used as a heat source for drying the cement raw material in the drying apparatus in the drying and pulverizing apparatus.

In addition, as will be described below, when a fluidized-bed type is adopted as the carbonation reaction tower, it is preferable that the kiln combustion exhaust gas discharged from the carbonation apparatus be recycled and used for forming the fluidized bed. The distribution of the flow rate of the kiln combustion exhaust gas discharged from the carbonation apparatus need only be determined in consideration of the operating status of the cement firing facility, and can be performed using the airflow control damper.

### (Powdered Material Containing Calcium Oxide)

The powdered material containing calcium oxide supplied to the carbonation apparatus is a powdered raw material (hereinafter, also referred to as a "powdered raw material 1") that is preheated and calcined in the suspension preheater and supplied to the rotary kiln, and a powdered raw material (hereinafter, also referred to as a "powdered raw material 2") contained in the kiln combustion exhaust gas before being supplied from the rotary kiln to the suspension preheater (1).

The powdered raw material 1 is supplied to the carbonation apparatus via a fractionation apparatus (12) that fractionates the powdered raw material preheated and calcined in the suspension preheater (1), and a powdered material supply apparatus 1 (13) for supplying the powdered raw material fractionated by the fractionation apparatus (12) to the carbonation apparatus.

The powdered raw material 1 contains a large amount of calcium oxide because calcium carbonate contained in the powdered raw material supplied to the suspension preheater (1) is preheated and calcined to become calcium oxide while releasing carbon dioxide through decarbonation reaction (CaCO₃ → CaO + CO₂).

In the carbonation apparatus, calcium oxide contained in the powdered raw material 1 adsorbs and carbonatively reacts with carbon dioxide contained in the kiln combustion exhaust gas, thereby making it possible to reduce the content of carbon dioxide in the kiln combustion exhaust gas. Therefore, as the powdered raw material 1, it is preferable to adopt one discharged from a lower-stage cyclone dust collector, as such material has a higher calcium oxide content. In the suspension preheater (1), as the powdered raw material progresses to the lower-stage cyclone dust collectors, the decarbonation reaction proceeds, and thus the content of calcium oxide increases. The decarbonation rate of the powdered raw material immediately before being charged into the calciner (2) (raw material conduit K1b in FIG. 2) is about 10%, while the powdered raw material discharged from the lowermost cyclone dust collector (cyclone dust collector C1 in FIG. 2) and raw material conduit (C1b) has a decarbonation rate of about 90%, and the content of calcium oxide in the powdered raw material dramatically increases by passing through the calciner. Therefore, it is more preferable to adopt the powdered raw material discharged from the lowermost cyclone dust collector as the powdered raw material 1.

Therefore, as shown in FIG. 2, it is preferable that the fractionation apparatus (12) be provided in the powdered raw material conduits (11, C1b) that supply the powdered raw material preheated and calcined in the suspension preheater (1) to the rotary kiln, that is, the powdered raw material conduits (11, C1b) between the lowermost cyclone dust collector C1 in the calciner-system gas duct and the rotary kiln.

The powdered raw material 2 contained in the kiln combustion exhaust gas before being supplied from the rotary kiln to the suspension preheater (1) is such that the decarbonation rate of calcium carbonate contained in the powdered raw material (powdered raw material mixture) supplied to the suspension preheater (1) reaches nearly 100%, that is, the total amount of the calcium carbonate is converted into calcium oxide. Therefore, as described above, in the carbonation apparatus, the content of carbon dioxide contained in the kiln combustion exhaust gas can be extremely efficiently reduced through the carbonation reaction (CaO + CO₂ → CaCO₃) with carbon dioxide contained in the kiln combustion exhaust gas.

Here, the decarbonation rate in the present specification is a numerical value that can be calculated by the following equation. $Decarbonation rate \left(%\right) = \left({Ca}_{0}-{Ca}_{1}\right) / Ca \times 100$
Ca₀: Amount of calcium carbonate contained in powdered raw material charged into suspension preheater (ton/h)
Ca₁: Amount of calcium carbonate contained in powdered raw material in cyclone dust collector C1 (ton/h)

In addition, the powdered raw material 2 is supplied to the carbonation apparatus via a bleed apparatus (8) that bleeds off the kiln combustion exhaust gas before being supplied to the lowermost cyclone dust collector of the kiln-system gas duct of the suspension preheater, a powdered raw material separation apparatus (9) that separates the powdered raw material contained in the kiln combustion exhaust gas bled off by the bleed apparatus (8), and a powdered material supply apparatus 2 (10) for supplying the powdered raw material separated by the powdered raw material separation apparatus (9) to the carbonation apparatus.

As the powdered material containing calcium oxide to be supplied to the carbonation apparatus, the powdered raw material 1 described above can be supplied alone, the powdered raw material 2 described above can be supplied alone, or the powdered raw materials 1 and 2 described above can be supplied simultaneously. As described above, the decarbonation rate of the powdered raw material 1 supplied to the rotary kiln is lower than the decarbonation rate of the powdered raw material 2 contained in the kiln combustion exhaust gas before being supplied from the rotary kiln to the suspension preheater (1). Therefore, it is preferable to use at least the powdered raw material 2 as the powdered material containing calcium oxide.

On the other hand, the amount of the powdered raw material 1 used can be arbitrarily adjusted within a range that does not affect the production of the cement clinker. For example, when the amount of calcium oxide is insufficient only by supplying the powdered raw material 2 and the reduction of the content of carbon dioxide in the kiln combustion exhaust gas is insufficient, the powdered raw material 1 can be used, or the amount of the powdered raw material 1 used can be increased.

The installation location of the bleed apparatus (8) is not particularly limited as long as it is a location where the kiln combustion exhaust gas can be bled off before being supplied to the lowermost cyclone dust collector of the kiln-system gas duct of the suspension preheater, and need only be any location of the gas flow path K0a that connects the rotary kiln and the lowermost cyclone dust collector K1, where the kiln combustion exhaust gas supplied from the rotary kiln first enters the suspension preheater (1).

As a bleed device adopted in the bleed apparatus (8), a device that has been commonly used in the related field, for example, a suction nozzle or the like need only be used. In addition, as a separation device adopted in the powdered raw material separation apparatus (9), a device that has been commonly used in the related field need only be adopted as in the above-described bleed device, and, for example, a separation device such as a cyclone dust collector need only be used.

### (Carbonation Reaction Tower)

As the carbonation reaction tower, a reaction tower that can produce a powdered material containing calcium carbonate by reaction between the combustion exhaust gas discharged from the suspension preheater (1) and the powdered material containing calcium oxide can be adopted without particular limitations.

For example, a simple reaction tower that produces calcium carbonate by blowing a powdered material containing calcium oxide into a duct through which the kiln combustion exhaust gas flows may be used, or a reaction tower that can achieve high reaction efficiency by ensuring longer contact time between the powdered material containing calcium oxide and the kiln combustion exhaust gas may be adopted. As an apparatus capable of increasing the reaction efficiency, a fluidized-bed type carbonation reaction tower, as shown in FIG. 3 is preferably exemplified, in which the powdered material containing calcium oxide is pneumatically agitated with the kiln combustion exhaust gas so that a reaction time can be ensured. As a result, the reaction efficiency of the carbonation reaction can be improved, and the production rate of calcium carbonate can be increased, thereby enabling reduction in the charged amount of the powdered material containing calcium oxide. As a result, the content of carbon dioxide in the kiln combustion exhaust gas can be efficiently reduced, and thus the amount of carbon dioxide released into the atmosphere can be more efficiently suppressed.

FIG. 3 shows that the kiln combustion exhaust gas supplied to the carbonation reaction tower is split into two by a gas distributor and supplied from two directions, but the present invention is not limited to this; for example, it may be supplied from one direction, or from three directions, four directions, or even five or more directions. Among these, considering that a swirling flow can be generated more efficiently, it is preferable to supply the kiln combustion exhaust gas from two directions.

In this case, it is preferable to supply the kiln combustion exhaust gas into the carbonation reaction tower such that a swirling flow is generated. The contact time between the powdered material containing calcium oxide and the kiln combustion exhaust gas can be further ensured, and the reaction efficiency between calcium oxide and carbon dioxide contained in the kiln combustion exhaust gas is improved.

When a fluidized-bed type carbonation reaction tower is adopted as the carbonation reaction tower, for the formation of the fluidized bed, it is preferable to recycle the kiln combustion exhaust gas discharged from the carbonation reaction tower and use the kiln combustion exhaust gas as gas for fluidization, as shown in FIG. 3. More specifically, it is preferable to use, for the formation of the fluidized bed, kiln combustion exhaust gas bled off from an outlet of the carbonation apparatus induced draft fan that supplies, to the drying apparatus, kiln combustion exhaust gas remaining after the carbonation apparatus product is separated by the dust collector from the kiln combustion exhaust gas containing the carbonation apparatus product discharged from the carbonation reaction tower.

The temperature in the carbonation reaction tower is linked to the temperature of the kiln combustion exhaust gas supplied to the carbonation apparatus. Therefore, the temperature in the carbonation reaction tower can be adjusted by adjusting the temperature of the kiln combustion exhaust gas supplied to the carbonation apparatus, specifically, by the above-described methods (i) to (iii).

The temperature in the carbonation reaction tower is preferably 250°C or higher and preferably 600°C or lower as an upper limit. When the temperature is 250°C or higher, the cement raw material can be satisfactorily dried, and, when the temperature is 600°C or lower, the reaction efficiency of the carbonation reaction of calcium oxide in the carbonation apparatus can be easily set to 100%. In consideration of the fact that, by performing the drying of the cement raw material with greater margin, the power consumption of the drying apparatus can be reduced by suspending the drying apparatus according to the stock amount of the dried raw material, and that failure prevention can be achieved by performing maintenance and inspection in conjunction with the suspension of the drying apparatus, the temperature is more preferably 300°C or higher. In addition, in consideration of the fact that an inexpensive general structural rolled steel is used as a material of the gas duct to achieve a more economical cement firing facility, the temperature is more preferably 400°C or lower.

The temperature of the kiln combustion exhaust gas discharged from the carbonation reaction tower cannot be generalized because the temperature is linked to the supply temperature of the kiln combustion exhaust gas to the carbonation apparatus, but is higher than the supply temperature of the kiln combustion exhaust gas to the carbonation apparatus because the carbonation reaction is an exothermic reaction. Therefore, by using the kiln combustion exhaust gas for the formation of the fluidized bed, the temperature in the carbonation reaction tower can be maintained at a high temperature, and the kiln combustion exhaust gas discharged from the carbonation apparatus can be suitably used as a heat source for drying the cement raw material.

### (Dust Collector)

It is preferable that the carbonation apparatus include a dust collector that separates the carbonation apparatus product contained in the kiln combustion exhaust gas discharged from the carbonation reaction tower and the kiln combustion exhaust gas. By providing the dust collector, the kiln combustion exhaust gas and the carbonation apparatus product can be easily separated.

As the dust collector, a dust collector that has been commonly used in the related field need only be used, and various dust collectors such as a bag filter, an electrostatic precipitator, and an inertial dust collector can be adopted.

### (Forced Draft Fan and Induced Draft Fan)

It is preferable that the carbonation apparatus include a forced draft fan and an induced draft fan. For example, as shown in FIG. 3, it is preferable that the carbonation apparatus include a fluidization forced draft fan for supplying the kiln combustion exhaust gas used for forming the fluidized bed to the carbonation reaction tower. By providing the fluidization forced draft fan, it is easy to maintain the fluidized bed formed by the kiln combustion exhaust gas in a favorable state.

In addition, it is also preferable that the carbonation apparatus include a carbonation apparatus induced draft fan for discharging the kiln combustion exhaust gas from the dust collector and supplying the kiln combustion exhaust gas to the drying apparatus.

### (Airflow Control Damper)

The duct of the kiln combustion exhaust gas of the carbonation apparatus may include an airflow control damper as necessary. For example, as shown in FIG. 3, airflow control dampers can be provided in the kiln combustion exhaust gas discharge duct (6), the carbonation apparatus air supply duct (7), the carbonation apparatus exhaust duct (14), an inlet duct of the carbonation apparatus induced draft fan, an inlet duct of the fluidization forced draft fan, and the like. By providing these airflow control dampers, the flow rate of the kiln combustion exhaust gas, for example, the flow rate of the kiln combustion exhaust gas supplied to the carbonation apparatus, the flow rate of the kiln combustion exhaust gas supplied directly to the drying apparatus without being supplied to the carbonation apparatus, and the flow rate of the kiln combustion exhaust gas used for forming the fluidized bed can be adjusted, and the pressure of the kiln combustion exhaust gas can also be adjusted.

There are no particular restrictions on the type of damper used for the airflow control damper as long as the flow rate of the kiln combustion exhaust gas can be adjusted; for example, various dampers such as a louver type, a butterfly type, and a vane control type can be appropriately selected and used.

### (Carbon Dioxide Concentration Meter)

It is preferable that the carbonation apparatus include a carbon dioxide concentration meter. For example, it is preferable that the carbonation apparatus exhaust duct (14) be provided with a carbon dioxide concentration meter.

By providing the carbon dioxide concentration meter in the carbonation apparatus exhaust duct (14), the degree of progress of the carbonation reaction in the carbonation reaction tower can be determined. Therefore, it is easy to adjust the charged amount of the powdered material containing calcium oxide according to the concentration of carbon dioxide in the kiln combustion exhaust gas discharged from the carbonation apparatus. As a result, it is possible to more efficiently suppress the amount of carbon dioxide released into the atmosphere and to efficiently dry the cement raw material.

### (Use of Carbonation Apparatus Product)

The powdered material containing calcium carbonate (carbonation apparatus product) produced by the carbonation reaction of the powdered material containing calcium oxide in the carbonation apparatus preferably contains a cement raw material composition such as silicon oxide, aluminum oxide, and iron oxide in addition to calcium carbonate, and thus is preferably used as a cement raw material. Therefore, as shown in FIGS. 1 and 3, it is preferable that the cement firing facility of the present embodiment include a carbonation apparatus product transport apparatus (15) that merges the powdered material containing calcium carbonate produced in the carbonation apparatus into the powdered raw material supply apparatus (16) that supplies the powdered raw material discharged from the drying and pulverizing apparatus to the suspension preheater.

The powdered material containing calcium carbonate (carbonation apparatus product) is combined with the powdered raw material discharged from the drying and pulverizing apparatus, and is supplied to the suspension preheater (1) and then to the rotary kiln. Then, the powdered material containing calcium carbonate (carbonation apparatus product) releases carbon dioxide into the combustion exhaust gas (calciner combustion exhaust gas and kiln combustion exhaust gas) by the decarbonation reaction.

In the cement firing facility of the present embodiment, about 20% of the carbon dioxide generated from the powdered material containing calcium carbonate (carbonation apparatus product) by the decarbonation reaction is released into the kiln combustion exhaust gas, and about 80% of the carbon dioxide is released into the calciner combustion exhaust gas. By reducing the carbon dioxide contained in the kiln combustion exhaust gas in the carbonation apparatus and releasing it into the atmosphere after using it for drying the cement raw material, the amount of carbon dioxide released into the atmosphere can be reduced. In addition, by using the powdered material that has adsorbed carbon dioxide in the carbonation apparatus as a cement raw material, a portion of the carbon dioxide adsorbed on the powdered material can be released into the calciner combustion exhaust gas. As a result, the amount of carbon dioxide in the calciner combustion exhaust gas can be increased, and thus the recovery rate of the carbon dioxide recovery apparatus can be improved.

**In** addition, the carbonation apparatus product, which has been calcined in the calciner-system gas duct and has released carbon dioxide, either constitutes a part of the cement clinker by being burned in the rotary kiln, or is fractionated by the fractionation apparatus (12) and supplied to the carbonation apparatus as a powdered material containing calcium oxide via the powdered material supply apparatus 1 (13), and thus is reused in the carbonation apparatus.

**In** addition, the powdered material containing calcium carbonate (carbonation apparatus product) can be effectively used for a filler (admixtures) contained in an asphalt mixture or the like, in addition to the use as a portion of the above-described cement raw material.

### [Carbon Dioxide Recovery Apparatus]

The cement firing facility of the present embodiment includes a carbon dioxide recovery apparatus that recovers carbon dioxide contained in the combustion exhaust gas discharged from the suspension preheater, and a calciner combustion exhaust gas discharge duct (5) for supplying the calciner combustion exhaust gas discharged from the calciner combustion exhaust gas outlet to the carbon dioxide recovery apparatus. That is, in the cement firing facility of the present embodiment, the combustion exhaust gas supplied to the carbon dioxide recovery apparatus needs to be at least the calciner combustion exhaust gas. As described above, since the calciner combustion exhaust gas has a higher content of carbon dioxide than the kiln combustion exhaust gas, recovering carbon dioxide from the calciner combustion exhaust gas leads to an improvement in the recovery efficiency of carbon dioxide. Further, by using carbon dioxide in the kiln combustion exhaust gas recovered as the carbonation apparatus product in the carbonation apparatus as a cement raw material, the content of carbon dioxide in the calciner combustion exhaust gas can be improved. Therefore, it is effective to supply the calciner combustion exhaust gas to the carbon dioxide recovery apparatus and recover carbon dioxide.

In addition, the cement firing facility of the present embodiment may include a kiln combustion exhaust gas discharge duct (not shown) for supplying the kiln combustion exhaust gas to the carbon dioxide recovery apparatus.

The type of the carbon dioxide recovery apparatus is not particularly limited as long as carbon dioxide can be recovered from the combustion exhaust gas, and the carbon dioxide recovery apparatus can be appropriately selected from, for example, a liquid absorption method, a membrane separation method, a solid adsorption method, and a compression liquefaction recovery method.

The carbon dioxide recovered by the carbon dioxide recovery apparatus can be effectively used for, for example, underground burial, methanation, or the like. As a result, it is possible to suppress the amount of carbon dioxide released into the atmosphere from the combustion exhaust gas, such as the calciner combustion exhaust gas.

### [Drying and Pulverizing Apparatus]

The cement firing facility of the present embodiment includes a drying and pulverizing apparatus that dries and pulverizes a cement raw material into a powdered raw material. As a heat source used for drying the cement raw material, the kiln combustion exhaust gas supplied to the carbonation apparatus is used as described above.

Examples of the drying and pulverizing apparatus that dries and pulverizes the cement raw material into a powdered raw material include a drying and pulverizing apparatus in which a drying apparatus such as a rotary dryer and a pulverizing apparatus such as a tube mill are combined, a drying and pulverizing apparatus such as a vertical roller mill that can perform drying and pulverizing simultaneously, and the like.

### [Blend of Cement Raw Material]

It is preferable that the cement firing facility of the present embodiment further include a powdered raw material mixture sampling apparatus (17) that samples a powdered raw material mixture, a chemical component measuring apparatus (18) that measures a chemical composition of the powdered raw material mixture sampled by the powdered raw material mixture sampling apparatus, and a cement raw material blending apparatus that adjusts blend of the cement raw material based on the measurement result of the chemical component measuring apparatus.

### (Powdered Raw Material Mixture Sampling Apparatus and Chemical Component Measuring Apparatus)

In the cement firing facility of the present embodiment, it is preferable to use, as the cement raw material, a powdered raw material mixture of a carbonation apparatus product (powder material containing calcium carbonate) transported from the carbonation apparatus and a powdered raw material discharged from the drying and pulverizing apparatus, in addition to the above-described cement raw material. In this case, it is necessary to perform blend of the cement raw material in consideration of the chemical component of the carbonation apparatus product (powdered material containing calcium carbonate) transported from the carbonation apparatus. Since these apparatuses are provided, when the powdered material containing calcium carbonate transported from the carbonation apparatus is used as the cement raw material, the chemical component of the powdered raw material mixture containing the powdered raw material discharged from the drying and pulverizing apparatus and the powdered material containing calcium carbonate transported from the carbonation apparatus can be quickly measured. Then, by feeding back the chemical component to the cement raw material blending apparatus, the chemical component of the powdered raw material supplied to the suspension preheater (1) can be quickly adjusted to a target value.

There are no particular restrictions on the types of the above-described sampling apparatus and measuring apparatus. For example, as the sampling apparatus, various samplers such as a slot sampler, a screw sampler, and a Vezin sampler can be used. As the chemical component measuring apparatus, various measuring apparatuses such as an X-ray fluorescence analyzer, an ICP emission spectrometer, and an atomic absorption spectrophotometer can be used.

In addition, as for the adjustment of the cement raw material, automatic control can be adopted.

### (Cement Raw Material Blending Apparatus)

It is preferable that the cement firing facility of the present embodiment include a cement raw material blending apparatus for adjusting the powdered raw material supplied to the suspension preheater to a target chemical component based on the chemical component of the powdered raw material supplied to the suspension preheater, which is measured by the chemical component measuring apparatus described above.

In the cement raw material blending apparatus, adjustment of the calcium content in the cement raw material can be performed by increasing or decreasing the supply amount of a Ca raw material such as limestone; adjustment of the silica content can be performed by increasing or decreasing the supply amount of an Si raw material such as silica stone; adjustment of the aluminum content can be performed by increasing or decreasing the supply amount of an Al raw material such as coal ash; and adjustment of the iron content can be performed by increasing or decreasing the supply amount of an Fe raw material such as copper slag. As a result, the chemical component of the clinker can be set to a target value.

More specifically, adjustment of the calcium content in the cement raw material can be performed by increasing or decreasing the supply amount of a Ca raw material such as limestone; adjustment of the silica content can be performed by increasing or decreasing the supply amount of a Si raw material such as silica stone; adjustment of the alumina content can be performed by increasing or decreasing the supply amount of an Al raw material such as coal ash; and adjustment of the iron content can be performed by increasing or decreasing the supply amount of an Fe raw material such as copper slag.

In addition, the powdered material supply apparatuses and transport apparatuses of the powdered material supply apparatus 2 (10), the powdered material supply apparatus 1 (13), the carbonation apparatus product transport apparatus (15), and the powdered raw material supply apparatus (16) described above may include a device for supplying and transporting the powdered material as necessary. Examples of the device for supply and transport include a transport device such as a screw conveyor and an apron feeder.

### (Other Devices)

The cement firing facility of the present embodiment has been described above in terms of the configuration and various conditions of the suspension preheater, the configuration and various conditions of the carbonation apparatus, the configuration and various conditions of the carbon dioxide recovery apparatus, the configuration and various conditions of the drying and pulverizing apparatus, and the like. The cement firing facility of the present embodiment includes a rotary kiln and a clinker cooler as main apparatuses in addition to these apparatuses.

The rotary kiln is an apparatus that fires the preheated and calcined powdered raw material in the suspension preheater (1) to produce cement clinker, and more specifically is an apparatus that completely decarbonates calcium carbonate contained in the powdered raw material to produce calcium oxide and that fires the calcium oxide at a high temperature of about 1450°C to produce cement clinker. In addition, the clinker cooler is an apparatus for cooling the clinker cooler produced in the rotary kiln.

As the rotary kiln and the clinker cooler, apparatuses that have been used in the related field can be adopted without limitation.

### [Method for Producing Cement Clinker]

A method for producing cement clinker of the present embodiment uses the cement firing facility according to the present embodiment, the method including: performing adjustment by any one of the following adjustment methods (i) to (iii).
(i) Adjusting a supply amount of the powdered raw material to the suspension preheater,
(ii) Adjusting a supply amount of a fuel to the rotary kiln, and
(iii) Adjusting an amount of water sprayed into the rotary kiln combustion exhaust gas duct.

As the cement firing facility used in the method for producing cement clinker of the present embodiment, the cement firing facility of the present embodiment is adopted. The cement firing facility of the present embodiment is as described above.

In addition, regarding the adjustment methods (i) to (iii), in the production method of the present embodiment, one adjustment method among the conditions (i) to (iii) may be adopted, or a plurality of adjustment methods may be adopted in combination. In consideration of ease of adjustment, it is preferable to adopt a plurality of methods in combination among the adjustment methods (i) to (iii).

In the method for producing cement clinker of the present embodiment, it is preferable to adjust the temperature of the kiln combustion exhaust gas to 250°C or higher and 600°C or lower by using any of the adjustment methods (i) to (iii).

The adjustment of the temperature of the kiln combustion exhaust gas discharged from the kiln combustion exhaust gas outlet to 250°C or higher and 600°C or lower is as described in the cement firing facility of the present embodiment, and, by setting the temperature within the above-described temperature range, the cement raw material can be satisfactorily dried, and the reaction efficiency of the carbonation reaction of calcium oxide in the carbonation apparatus can be easily improved to nearly 100%. In addition, as described in the cement firing facility of the present embodiment, it is preferable to set the temperature to 300°C or higher and 400°C or lower. Examples

Hereinafter, the present invention will be described in detail using Examples, but is not limited to the following Examples.

### (Examples)

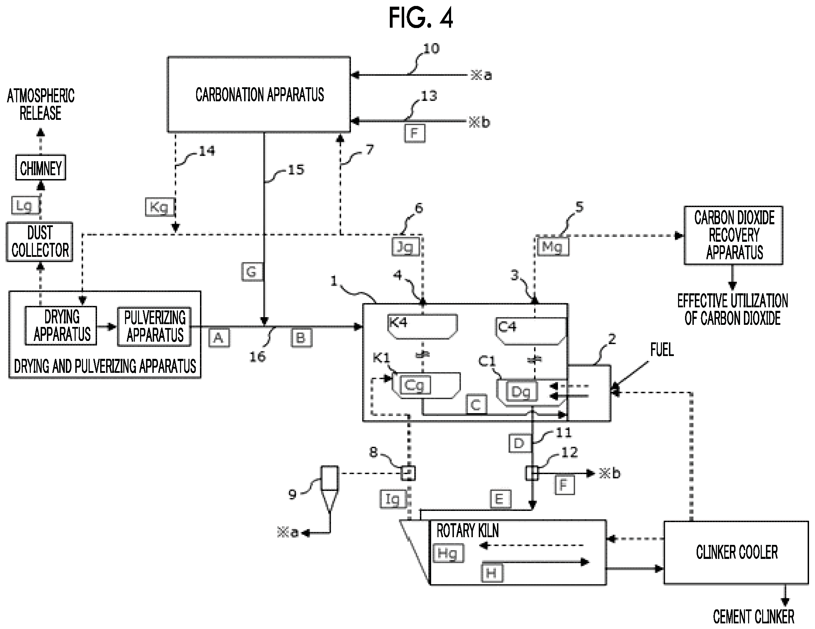

Using a cement firing facility having the configuration of the flow diagram shown in FIG. 1, cement clinker was produced by charging a cement raw material at 200 ton/h. Here, the temperature of the kiln combustion exhaust gas at the kiln combustion exhaust gas outlet was adjusted to 380°C, the total amount of the kiln combustion exhaust gas ((Jg) in FIG. 4) discharged from the kiln combustion exhaust gas outlet was supplied to the carbonation apparatus, and the total amount of the kiln combustion exhaust gas ((Kg) in FIG. 4) discharged from the carbonation apparatus was supplied to the drying apparatus and used for drying the cement raw material. The amount of the powdered raw material ((F) in FIG. 4) fractionated from the fractionation apparatus and supplied to the carbonation apparatus was adjusted such that the amount of carbon dioxide in the kiln combustion exhaust gas discharged from the carbonation apparatus was 10% of the amount of carbon dioxide in the kiln combustion exhaust gas supplied to the carbonation apparatus, and the total amount of the powdered material ((G) in FIG. 4) containing calcium carbonate transported from the carbonation apparatus was used as the cement raw material. In addition, the total amount of the calciner combustion exhaust gas (Mg in FIG. 4) discharged from the calciner combustion exhaust gas outlet was supplied to the carbon dioxide recovery apparatus.

When the operation of the cement firing facility reached a steady state, measurements were taken for the flow rates of the following materials shown in FIG. 4, as well as and the content rates of calcium carbonate and calcium oxide contained in those powdered materials: the powdered raw material (A) at an outlet of the drying and pulverizing apparatus; the powdered raw material mixture (B) of the powdered raw material (A) and the powdered material (G) containing calcium carbonate transported from the carbonation apparatus; the powdered raw material (C) discharged from the lowermost cyclone dust collector of the kiln-system gas duct of the suspension preheater; the powdered raw material (D) discharged from the lowermost cyclone dust collector of the calciner-system gas duct; the powdered raw material (E) supplied to the rotary kiln after being fractionated by the fractionation apparatus from the powdered raw material (D); the powdered raw material (F) fractionated from the fractionation apparatus and supplied to the carbonation apparatus; and the powdered raw material (G) containing calcium carbonate transported from the carbonation apparatus. In addition, the balance of calcium carbonate, calcium oxide, and carbon dioxide was calculated from the flow rates of the combustion exhaust gases ((Ig), (Jg), (Kg), (Lg), and (Mg)) such as the kiln combustion exhaust gas and the calciner combustion exhaust gas, as well as the carbon dioxide concentrations in these combustion exhaust gases, the flow rate of the fuel, and the carbon content. The results are shown in Table 1.

It was confirmed that, by using the carbonation apparatus, the amount of carbon dioxide (Lg) contained in the kiln combustion exhaust gas and released into the atmosphere was 4 ton/h, and the amount of carbon dioxide (Mg) recovered in the carbon dioxide recovery apparatus was 111 ton/h.

The temperature of the kiln combustion exhaust gas adjusted to 380°C at the kiln combustion exhaust gas outlet was decreased to 350°C at an inlet of the carbonation apparatus due to heat dissipation from the kiln combustion exhaust gas discharge duct or the like. The temperature of the kiln combustion exhaust gas in the carbonation apparatus exhaust duct (the temperature immediately before the merging with the kiln combustion exhaust gas discharge duct) was 380°C, and the temperature was raised by 30°C due to the carbonation reaction (exothermic reaction) in the carbonation apparatus. When the cement raw material was dried in the drying and pulverizing apparatus using the total amount of the kiln combustion exhaust gas, the required amount of the cement raw material could be dried. The temperature of the kiln combustion exhaust gas at an outlet of the drying apparatus at this time was 180°C.

### (Comparative Examples)

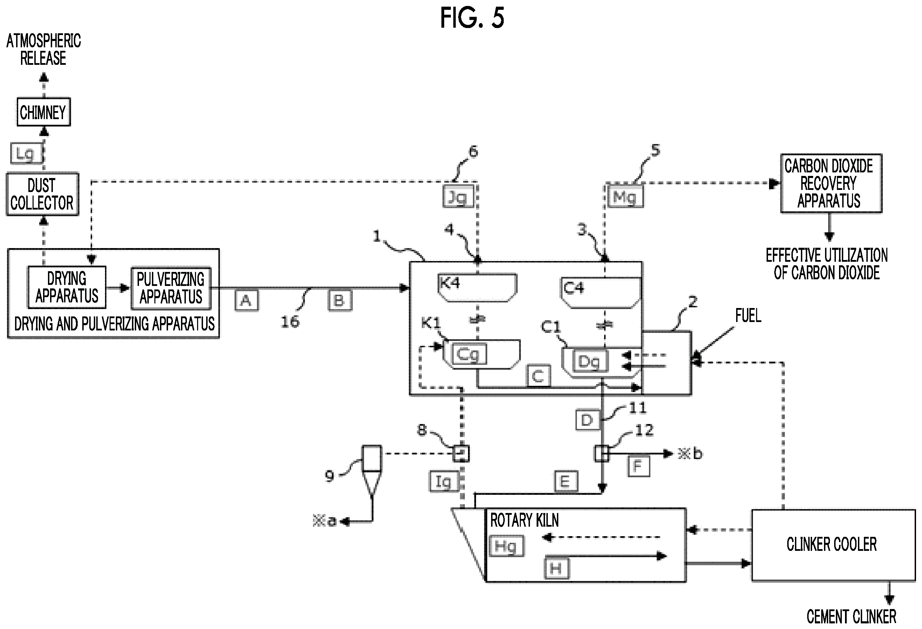

In Examples, the cement firing facility was operated in the same manner as in Examples, except that no powdered raw material was supplied to the carbonation apparatus. When the operation of the cement firing facility reached a steady state, the same measurement as in Examples was performed to calculate the balance of calcium carbonate, calcium oxide, and carbon dioxide. The measurement locations are shown in FIG. 5, and the calculation results are shown in Table 1.

It was confirmed that, without the carbonation apparatus, the amount of carbon dioxide released into the atmosphere along with the kiln combustion exhaust gas was 37 ton/h, and the amount of carbon dioxide recovered in the carbon dioxide recovery apparatus was 78 ton/h.

[Table 1]

**Table 1**

| | | | | A | B A+G | C | Cg | D | Dg | E D-F | F | G | H | Hg | Ig | Jg Cg+Ig | Kg | Lg | Mg |
|---|---|---|---|---|---|---|---|---|---|---|---|---|---|---|---|---|---|---|---|
| Example | Powdered material | Calcium carbonate | ton/h | 156 | 249 | 224 | - | 25 | - | 15 | 10 | 93 | 0 | - | - | - | - | - | - |
| | | Calcium oxide | ton/h | 0 | 11 | 25 | - | 136 | - | 79 | 57 | 11 | 87 | - | - | - | - | - | - |
| | | Total | ton/h | 156 | 260 | 249 | - | 161 | - | 94 | | 104 | 87 | - | - | - | - | - | - |
| | Gas | Energy-derived CO₂ | ton/h | - | - | - | - | - | - | - | - | | - | - | 22 | 22 | - | - | 23 |
| | | Non-energy-derived CO₂ | ton/h | - | - | - | 11 | - | 88 | - | - | - | - | 7 | 7 | 18 | - | - | 88 |
| | | Total | ton/h | - | - | - | 11 | - | 88 | - | - | - | - | 7 | 29 | 40 | 4 | 4 | 111 |
| Comparative Example | Powdered material | Calcium carbonate | ton/h | 156 | 156 | 140 | - | 15 | - | 15 | - | - | 0 | - | - | - | - | - | - |
| | | Calcium oxide | ton/h | 0 | 0 | 9 | - | 79 | - | 79 | | - | 87 | - | - | - | - | - | - |
| | | Total | ton/h | 156 | 156 | 149 | | 94 | - | 94 | - | - | 87 | - | - | - | - | - | - |
| | Gas | Energy-derived CO₂ | ton/h | - | - | - | - | - | - | - | | - | - | - | 23 | 23 | - | - | 23 |
| | | Non-energy-derived CO₂ | ton/h | - | - | - | 7 | - | 55 | - | | - | - | 7 | 7 | 14 | - | - | 55 |
| | | Total | ton/h | - | - | | 7 | - | 55 | - | | - | 30 | 7 | 30 | 37 | - | 37 | 78 |

| | | | | | | | | | | | | | | | | | | | |
|---|---|---|---|---|---|---|---|---|---|---|---|---|---|---|---|---|---|---|---|
| *, "Non-energy-derived CO₂" indicates carbon dioxide generated from the powdered raw material, and "Energy-derived" indicates carbon dioxide generated from the fuel used in the suspension preheater and the rotary kiln. | | | | | | | | | | | | | | | | | | | |

In the above table, the abbreviations A to Mg are as follows.
· (A): Powdered raw material at outlet of drying and pulverizing apparatus
· (B): Powdered raw material mixture of powdered raw material (A) and powdered material (G) containing calcium carbonate transported from carbonation apparatus
· (C): Powdered raw material discharged from lowermost cyclone dust collector K1 of kiln-system gas duct of suspension preheater
· (Cg): Carbon dioxide generated by decarbonation of powdered raw material supplied to K1 in cyclone dust collector K1
· (D): Powdered raw material discharged from lowermost cyclone dust collector of calciner-system gas duct
· (Dg): Carbon dioxide generated by decarbonation of powdered raw material (C) in cyclone dust collector C1 from calciner
· (E): Powdered raw material supplied to rotary kiln after being fractionated from powdered raw material (D) by fractionation apparatus
· (F): Powdered raw material fractionated from fractionation apparatus and supplied to carbonation apparatus
· (G): Powdered material containing calcium carbonate transported from carbonation apparatus
· (H): Powdered material generated by decarbonation of powdered raw material (E) in rotary kiln
· (Hg): Carbon dioxide generated by decarbonation of powdered raw material (E) in rotary kiln
· (Ig): Kiln combustion exhaust gas discharged from rotary kiln
· (Jg): Kiln combustion exhaust gas discharged from kiln combustion exhaust gas outlet
· (Kg): Kiln combustion exhaust gas discharged from carbonation apparatus
· (Lg): Kiln combustion exhaust gas discharged from drying apparatus
· (Mg): Calciner combustion exhaust gas discharged from calciner combustion exhaust gas outlet

From the results of Examples and Comparative Examples, it was confirmed that, while maintaining the charged amount of the powdered raw material and the production amount of the clinker as they were, the amount (Lg) of carbon dioxide released into the atmosphere could be reduced from 37 ton/h to 4 ton/h, the amount (Mg) of carbon dioxide recovered in the carbon dioxide recovery apparatus could be increased from 78 ton/h to 111 ton/h, and the cement raw material could be dried. As described above, with the cement firing facility of the present embodiment and the method for producing cement clinker using the same, it was confirmed that the amount of carbon dioxide released into the atmosphere could be suppressed and the cement raw material could be efficiently dried.

## Claims

1. A cement firing facility comprising:
a drying and pulverizing apparatus that dries and pulverizes a cement raw material into a powdered raw material;
a suspension preheater that preheats and calcines the powdered raw material;
a rotary kiln that fires the preheated and calcined powdered raw material to produce cement clinker;
a cement clinker cooler that cools the cement clinker;
a carbon dioxide recovery apparatus that recovers carbon dioxide contained in combustion exhaust gas discharged from the suspension preheater; and
a carbonation apparatus that produces a powdered material containing calcium carbonate by reaction of the combustion exhaust gas discharged from the suspension preheater and a powdered material containing calcium oxide,
wherein the suspension preheater includes
a calciner that calcines the powdered raw material,
two different gas ducts, the two gas ducts including a calciner-system gas duct through which calciner combustion exhaust gas discharged from the calciner passes and a kiln-system gas duct through which kiln combustion exhaust gas discharged from the rotary kiln passes,
a calciner combustion exhaust gas outlet for discharging, from the suspension preheater, the calciner combustion exhaust gas having preheated and calcined the powdered raw material by passing through the calciner-system gas duct, and
a kiln combustion exhaust gas outlet for discharging, from the suspension preheater, the kiln combustion exhaust gas having preheated and calcined the powdered raw material by passing through the kiln-system gas duct, and
the cement firing facility includes
exhaust gas ducts including
a calciner combustion exhaust gas discharge duct for supplying the calciner combustion exhaust gas discharged from the calciner combustion exhaust gas outlet to the carbon dioxide recovery apparatus,
a kiln combustion exhaust gas discharge duct for supplying the kiln combustion exhaust gas discharged from the kiln combustion exhaust gas outlet to a drying device included in the drying and pulverizing apparatus,
a carbonation apparatus air supply duct for supplying the kiln combustion exhaust gas passing through the kiln combustion exhaust gas discharge duct to the carbonation apparatus, and
a carbonation apparatus exhaust duct for supplying the kiln combustion exhaust gas discharged from the carbonation apparatus to the kiln combustion exhaust gas discharge duct,
a fractionation apparatus that fractionates the preheated and calcined powdered raw material from the suspension preheater, and a powdered material supply apparatus 1 for supplying the powdered raw material fractionated by the fractionation apparatus to the carbonation apparatus as the powdered material containing calcium oxide, and
a bleed apparatus that bleeds off the kiln combustion exhaust gas before being supplied to a cyclone dust collector at a lowermost stage of the kiln-system gas duct of the suspension preheater, a powdered raw material separation apparatus that separates the powdered raw material contained in the kiln combustion exhaust gas bled off by the bleed apparatus, and a powdered material supply apparatus 2 for supplying the powdered raw material separated by the powdered raw material separation apparatus to the carbonation apparatus as the powdered material containing calcium oxide.

2. The method for producing cement clinker according to Claim 1,
wherein the fractionation apparatus is provided in a powdered raw material conduit that supplies the powdered raw material preheated and calcined in the suspension preheater to the rotary kiln.

3. The cement firing facility according to Claim 1, further comprising:
a powdered raw material supply apparatus that supplies the powdered raw material discharged from the drying and pulverizing apparatus to the suspension preheater, and a carbonation apparatus product transport apparatus that combines the powdered material containing calcium carbonate produced in the carbonation apparatus with the powdered raw material discharged from the drying and pulverizing apparatus.

4. The cement firing facility according to Claim 3, further comprising:
a powdered raw material mixture sampling apparatus that samples a powdered raw material mixture of the powdered material containing calcium carbonate transported by the carbonation apparatus product transport apparatus and the powdered raw material discharged from the drying and pulverizing apparatus, a chemical component measuring apparatus that measures a chemical component of the powdered raw material mixture sampled by the powdered raw material mixture sampling apparatus, and a cement raw material blending apparatus that adjusts blend of the cement raw material based on a measurement result of the chemical component measuring apparatus.

5. The cement firing facility according to Claim 1,
wherein the carbonation apparatus is a fluidized bed reactor.

6. A method for producing cement clinker using the cement firing facility according to Claim 1, the method comprising:
performing adjustment by any one of the following adjustment methods (i) to (iii),
(i) adjusting a supply amount of the powdered raw material to the suspension preheater,
(ii) adjusting a supply amount of a fuel to the rotary kiln, and
(iii) adjusting an amount of water sprayed into the rotary kiln combustion exhaust gas duct.

7. The method for producing cement clinker according to Claim 6,
wherein a temperature of the kiln combustion exhaust gas discharged from the kiln combustion exhaust gas outlet is adjusted to 250°C or higher and 600°C or lower by the adjustment method.
